# EUROPÄISCHE PATENTANMELDUNG

(11) **EP 4 082 879 A1**
(43) Veröffentlichungstag der Anmeldung: **02.11.2022**
(21) Anmeldenummer: 22169509.1
(22) Anmeldetag: 22.04.2022
(51) Int. Cl.: B62J 6/03, B62J 50/21, B62J 27/00

(54) **ANZEIGEEINRICHTUNG FÜR EIN FAHRRAD**

(30) Priorität: 29.04.2021 DE 102021204300
(71) Anmelder: MAHLE International GmbH, 70376 Stuttgart (DE)
(72) Erfinder: BEERENS, Christoph, 70193 Stuttgart (DE); WEHKING, Nadine, 70192 Stuttgart (DE); ZUMSTEIN, Tillman, 70174 Stuttgart (DE)
(74) Vertreter: BRP Renaud & Partner mbB Rechtsanwälte Patentanwälte Steuerberater

(57) **Zusammenfassung**

Die Erfindung betrifft eine Anzeigeeinrichtung (1) für ein Fahrrad (20), bevorzugt für ein Pedelec (21), oder für einen Fahrradhelm (25). Die Anzeigeeinrichtung (1) umfasst einen Träger (2) zum Anbringen an einem Lenker (24) des Fahrrads (20) oder zum Anbringen an einem Fahrradhelm, wobei auf dem Träger (2) eine Mehrzahl an steuerbaren Leuchtelementen (10) zum Emittieren von Licht angeordnet ist.

## Beschreibung

Die Erfindung betrifft eine Anzeigeeinrichtung für ein Fahrrad, bevorzugt für ein Pedelec. Die Erfindung betrifft ferner ein Fahrrad mit wenigstens einer solchen Anzeigeeinrichtung sowie ein Verfahren zum Betreiben eines solchen Fahrrads.

Fahrräder, insbesondere mit elektrischem Antrieb, finden in zunehmendem Maße Einsatz im Straßenverkehr. Dadurch erhöht sich jedoch auch das Risiko für Verkehrsunfälle, an welchen solche Fahrräder beteiligt sind. Dies gilt insbesondere für Fahrräder mit elektrischem Antrieb, welche ohne weiteres die Fortbewegung mit einer relativ hohen Geschwindigkeit von 25 km/h und mehr ermöglichen.

Gefahrensituationen entstehen insbesondere, wenn der Fahrer des Fahrrads andere Verkehrsteilnehmer, die sich in einem rückwärtigen Bereich des Fahrrads befinden, nicht rechtzeitig erkennen kann. Zwar ist es bekannt, am Lenker des Fahrzeugs einen Rückspiegel anzubringen, mit welchem der Fahrer des Fahrzeugs auch kontinuierlich den rückwärtigen Bereich des Fahrrads beobachten kann, insbesondere ohne hierfür den Kopf nach hinten wenden zu müssen. Jedoch erweisen sich solche Rückspiegel als beschädigungsanfällig und auch unkomfortabel in der Handhabung. Aus diesem Grund verzichten in der Praxis die meisten Benutzer eines Fahrrads auf einen solchen Rückspiegel.

Vor diesem Hintergrund ist es eine Aufgabe der vorliegenden Erfindung, eine Anzeigeeinrichtung schaffen, mittels welcher der Fahrer eines Fahrrads über im rückwärtigen Bereich seines Fahrrads etwaig vorhandene Verkehrsteilnehmer aufmerksam gemacht werden kann. Des Weiteren ist es eine Aufgabe der vorliegenden Erfindung, ein Fahrrad mit einer solchen Anzeigeeinrichtung bereitzustellen. Schließlich ist es auch eine Aufgabe der vorliegenden Erfindung, ein Verfahren zum Betreiben eines solchen Fahrrad zu schaffen.

Diese Aufgaben wurden durch die Gegenstände der unabhängigen Patentansprüche gelöst. Bevorzugte Ausführungsformen sind Gegenstand der abhängigen Patentansprüche.

Grundidee der Erfindung ist demnach, eine Anzeigeeinrichtung mit mehreren elektrisch steuerbaren Leuchtelementen zu versehen und diese so auszubilden, dass die Anzeigeeinrichtung an einem Lenker des Fahrrads montiert oder an einem Fahrradhelm zum Schutz der den Helm tragenden Person - im Folgenden als "Helmträger" bezeichnet - gegen Kopfverletzungen verbaut werden kann, sodass wiederum die Leuchtelemente vom Benutzer bzw. Fahrer des Fahrrads gesehen werden können. Auf diese Weise kann die Anzeigeeinrichtung dazu verwendet werden, den Benutzer des Fahrrads durch Einschalten, Ausschalten oder Umschalten von einzelnen oder allen der Leuchtelemente über potentiell gefährliche Verkehrssituationen, die sich im rückwärtigen Bereich des Fahrrads abspielen können, zu informieren. Die Anzeigeeinrichtung übernimmt also insbesondere die Funktion einer Warnvorrichtung für den Benutzer bzw. Fahrer des Fahrrads.

Mit "Einschalten" ist dabei gemeint, dass ein vorher kein Licht emittierendes Leuchtelement in einen Zustand versetzt wird, in welchem es Licht emittiert. Mit "Ausschalten" ist vorliegend gemeint, dass ein bereits Licht emittierendes Leuchtelement in einen Zustand versetzt wird, in welchem es kein Licht mehr emittiert. Mit "Umschalten" ist vorliegend gemeint, dass die Art der Lichtemission geändert wird. Dies betrifft insbesondere die Farbe oder/und die Helligkeit des vom Leuchtelement emittierten Lichts, wenn das Leuchtelement zur Emission von Licht mit unterschiedlichen Farben bzw. unterschiedlicher Helligkeit ausgebildet ist.

Durch Zusammenwirken der erfindungsgemäßen Anzeigeeinrichtungen mit einem geeigneten Radarsensor, der den rückwärtigen Bereich des Fahrrads überwacht, ist es dadurch möglich, den Benutzer bzw. Fahrer des Fahrrads auf im rückwärtigen Bereich vorhandene Verkehrsteilnehmer hinzuweisen. Bei solchen Verkehrsteilnehmern kann es sich um andere Fahrräder, aber auch um Kraftfahrzeuge, insbesondere um Personenfahrzeuge und Nutzfahrzeuge, sowie um Fußgänger handeln. In allen genannten Fällen wird der Fahrer bzw. Benutzer des Fahrrads auf etwaige Gefahrensituationen aufmerksam gemacht und kann folglich besser und rechtzeitig auf diese Gefahrensituationen reagieren.

Dabei ist es zum Erkennen einer solchen Gefahrensituation nicht erforderlich, während des Fahrens des Fahrrads in regelmäßigen Zeitabständen den Kopf nach hinten zu wenden, sodass sich der Fahrer auf das Vorfeld des Fahrrads konzentrieren kann.

Um die Anzeigeeinrichtung am Lenker des Fahrrads montieren zu können, wird vorgeschlagen, die erfindungsgemäße Anzeigeeinrichtung mit einem ringförmigen Träger auszustatten, der außen am Lenker in der Art eine Schelle befestigt werden kann. Dies ermöglicht eine einfache Montage der Anzeigeeinrichtung am Fahrrad. Insbesondere ist es möglich, gleich zwei Anzeigeeinrichtungen am Lenker anzubringen, so etwa jeweils im Bereich eines am Lenker vorhandenen linken und rechten Griffs, die zum Greifen des Lenkers durch den Benutzer bzw. Fahrer vorgesehen sind. Dies ermöglicht es, die am linken Griff angeordnete Anzeigeeinrichtung Verkehrssituationen zuzuordnen, die sich in einem Bereich links hinter dem Fahrrad ereignen, und entsprechend die am rechten Griff angeordnete Anzeigeeinrichtung Verkehrssituationen zuzuordnen, die sich in einem Bereich rechts hinter dem Fahrrad ereignen.

Eine erfindungsgemäße Anzeigeeinrichtung für ein Fahrrad, bevorzugt für ein Pedelec, umfasst einen Träger zum Anbringen der Anzeigeeinrichtung an einem Lenker des Fahrrads oder zum Anbringen an einem Fahrradhelm. Erfindungsgemäß ist auf dem Träger eine Mehrzahl an steuerbaren Leuchtelementen zum Emittieren von Licht angeordnet. Bei solchen Leuchtelementen kann es sich insbesondere um Licht emittierende Dioden (LED) handeln, die bevorzugt nebeneinander - insbesondere in der Art einer Leuchtleiste - am Träger der Anzeigeeinrichtung angeordnet sein können.

Gemäß einer bevorzugten Ausführungsform weist der Träger eine ringförmige bzw. hohlzylindrische Geometrie auf, ist zum Anbringen an einem Lenker des Fahrrads zweiteilig ausgebildet und umfasst zwei jeweils ringsegmentförmige, vorzugsweise jeweils halbringförmige, Träger-Elemente. Diese beiden Träger-Elemente sind mittels eines Scharniers gelenkig miteinander verbunden und zwischen einer Schließstellung, in welcher die beiden Träger-Elemente eine Ringöffnung einfassen, und einer Offenstellung verstellbar, in welchem sie am Fahrrad, insbesondere an einem Lenker des Fahrrads, montiert oder von diesem demontiert werden können. Eine solche schellenartige Ausbildung des Trägers bzw. der Anzeigeeinrichtung ermöglich eine einfache Montage an Lenker, die typischerweise durch eine Lenkerstange bzw. durch einen Rohrkörper gebildet ist. Der ringförmige Träger mit den beiden ringsegment-förmigen Träger-Elementen kann auf diese Weise einfach am Lenker bzw. an der Lenkstange bzw. am Rohrkörper montiert werden.

Gemäß einer bevorzugten Ausführungsform umfasst der Träger eine Fixiereinrichtung, die im Bereich der beiden vom Scharnier abgewandten Umfangsenden der Träger-Elemente angeordnet ist und mittels welcher die beiden Träger-Elemente in der Schließstellung aneinander fixierbar oder fixiert sind. Auf diese Weise kann eine dauerhaft stabile Fixierung der Anzeigeeinrichtung am Lenker des Fahrrads sichergestellt werden.

Besonders zweckmäßig kann wenigstens ein Leuchtelement auf einer, vorzugsweise genau einer, Stirnseite des Trägers, insbesondere von wenigstens einem der beiden Träger-Elemente angeordnet sein. Dadurch wird bei geeigneter Ausrichtung der Stirnseite - typischerweise zur Mittellängsachse des Fahrrads hin - sichergestellt, dass der Benutzer bzw. Fahrer des Fahrrads die Leuchtelemente und somit das von ihnen gegebenenfalls emittierte Licht gut wahrnehmen kann, sodass die Anzeigeeinrichtung auch den angestrebten Zweck einer Warnvorrichtung vor Gefahrensituationen im Straßenverkehr erfüllen kann.

Besonders zweckmäßig ist wenigstens ein Leuchtelement auf einer Außenumfangsseite des Trägers, insbesondere von wenigstens einem der beiden Träger-Elemente, angeordnet. Alternativ dazu können alle Leuchtelemente stirnseitig am Träger angeordnet sein. Gemäß einer weiteren Alternative kann ein (erster) Teil der Leuchtelemente umfangsseitig und ein (zweiter) Teil der Leuchtelemente stirnseitig am Träger angeordnet sein. Bei dieser Alternative bestehen besonders bevorzugt die mehreren Leuchtelemente aus dem ersten Teil und dem zweiten Teil, d.h. jedes Leuchtelement ist entweder dem ersten Teil oder dem zweiten Teil zugeordnet. Auch die voranstehend genannten Maßnahmen stellen jeweils sicher, dass bei geeigneter Ausrichtung der Anzeigeeinrichtung am Lenker, typischerweise zur Mittellängsachse des Fahrrads hin, sichergestellt ist, dass der Benutzer bzw. Fahrer des Fahrrads die Leuchtelemente und somit das von ihnen gegebenenfalls emittierte Licht gut erkennen kann.

Gemäß einer anderen bevorzugten Ausführungsform ist am Träger ein elektrischer Anschluss vorgesehen, mittels welchem die Leuchtelemente drahtgebunden elektrisch mit einer Steuerungs-/Regelungseinrichtung des Fahrrads verbunden werden können. Auf diese Weise lässt sich die Anzeigeeinrichtungen ohne großen Aufwand und somit auch kostengünstig mit einer an einem Fahrrad vorhandenen Steuerungs-/Regelungseinrichtung zum Steuern der Leuchtelemente der Anzeigeeinrichtungen verbinden. Alternativ dazu kann die Anzeigeeinrichtung mit einer Kommunikationseinheit ausgestattet sein, mittels welcher die Anzeigeeinrichtung drahtlos mit einer Steuerungs-/Regelungseinrichtung kommunizieren kann, so dass die Steuerungs-/Regelungseinrichtung die Anzeigeeinrichtung drahtlos ansteuern kann.

Gemäß einer vorteilhaften Weiterbildung sind die Leuchtelemente separat ansteuerbar ausgebildet. Auf diese Weise ergeben sich durch entsprechende Ansteuerung einzelner, mehrerer oder aller Leuchtelemente vielfältige Möglichkeiten, den Fahrer des Fahrrads auf unterschiedliche mögliche Gefahrensituationen hinzuweisen, die sich insbesondere im Zusammenhang mit im rückwärtigen Bereich des Fahrrads vorhandenen Verkehrsteilnehmern ergeben können. Insbesondere können spezielle Lichtsequenzen erzeugt werden, bei welchen einzelne, mehrere oder alle Leuchtelemente zeitlich versetzt zueinander angesteuert - also eingeschaltet, ausgeschaltet oder umgeschaltet - werden.

Gemäß einer weiteren vorteilhaften Weiterbildung können die Leuchtelemente mittels einer für das von den Leuchtelementen emittierte Licht lichtdurchlässigen Schutzabdeckung abgedeckt sein. Auf diese Weise sind die Leuchtelemente auch im Dauerbetrieb in einem Fahrrad gegen Beschädigung durch mechanische Einwirkungen, Schmutz, Feuchtigkeit und dergleichen geschützt, sodass sich die Lebensdauer einer solchen Anzeigeeinrichtung mit Schutzabdeckung gegenüber Anzeigeeinrichtungen ohne eine solche Schutzabdeckung erhöht.

Gemäß einer weiteren vorteilhaften Weiterbildung ist/sind wenigstens eines, bevorzugt mehrere, besonders bevorzugt alle der Leuchtelemente so ausgebildet, dass es/sie wahlweise Licht mit einer von wenigstens zwei, vorzugsweise mehreren, verschiedenen Farben emittieren kann/können oder/und dass es/sie Licht mit unterschiedlicher Helligkeit emittieren kann/können. Auf diese Weise erhöht sich die Anzahl an unterschiedlichen Möglichkeiten, mittels welchen der Fahrer durch Lichtemission auf verschiedene Gefahrensituationen hingewiesen werden kann, die sich insbesondere im Zusammenhang mit im rückwärtigen Bereich des Fahrrads vorhandenen Verkehrsteilnehmern ergeben können.

Die Erfindung betrifft ferner einen Fahrradhelm zur Verwendung mit einem Fahrrad und zum Schutz eines Helmträgers vor Kopfverletzungen. Der Fahrradhelm umfasst einen schalenartig ausgebildeten Helmkörper zum Absorbieren von äußeren mechanischen Stößen und Schlägen und ein, vorzugsweise verstellbar, am Helmkörper angebrachtes Helmvisier. Ferner umfasst der Fahrradhelm zwei, vorzugsweise nebeneinander, auf oder am Helmvisier angeordnete erfindungsgemäße Anzeigeeinrichtungen. Der Träger der AE kann als mechanisch starres Band oder aber als elastisches Band ausgeführt sein, wobei letztere Variante leichter an Helmvisiere mit unebener Oberfläche angepasst werden kann. Die voranstehend erläuterten Vorteile der erfindungsgemäßen Anzeigeeinrichtung übertragen sich daher auf den erfindungsgemäßen Fahrradhelm mit den beiden Anzeigeeinrichtungen. Die beiden Anzeigeeinrichtungen sind so am Helmvisier angeordnet, dass sie für den Helmträger beim Tragen des Helms sichtbar sind. Der Fahrradhelm umfasst außerdem einen elektrischen Energiespeicher - insbesondere eine, vorzugsweise wiederaufladbare, elektrische Batterie - zum Versorgen der Anzeigeeinrichtungen mit elektrischer Energie und eine Kommunikationseinheit zum drahtlosen Verbinden der Anzeigeeinrichtungen mit einer Steuerungs-/Regelungseinrichtung des Fahrrads.

Gemäß einer bevorzugten Ausführungsform des erfindungsgemäßen Fahrradhelms weist der Fahrradhelm eine Mittellängsachse auf, welche den Fahrradhelm in eine linke und in eine rechte Helmhälfte unterteilt. Bei dieser Ausführungsform ist eine der beiden Anzeigeeinrichtung in der linken Helmhälfte am Helmvisier angeordnet und die andere Anzeigeeinrichtung an der rechten Helmhälfte am Helmvisier angeordnet. Dies erlaubt eine Zuordnung der links angeordneten Anzeigeeinrichtung zu Verkehrssituationen, die sich links hinter dem Fahrrad ereignen, und eine Zuordnung der rechts angeordneten Anzeigeeinrichtung zu Verkehrssituationen, die sich rechts hinter dem Fahrrad ereignen.

Die Erfindung betrifft ferner ein Fahrrad, bevorzugt ein Pedelec, mit einem Hinterrad und mit einem lenkbaren Vorderrad. Ferner umfasst das Fahrrad einen Sitz, auf welchem der Benutzer bzw. Fahrer des Fahrrads sitzen kann. Außerdem umfasst das Fahrrad einen Lenker zum Steuern des Vorderrads durch den Benutzer bzw. Fahrer und wenigstens einen in einem hinteren Bereich des Fahrrads (angeordneten Radarsensor. Mittels des wenigstens einen Radarsensors kann ein sich hinten an das Fahrrad anschließender hinterer Umgebungsbereich des Fahrrads zumindest bereichsweise auf das Vorhandensein wenigstens eines weiteren Verkehrsteilnehmers hin überwacht werden. Das Fahrrad umfasst ferner eine Steuerungs-/Regelungseinrichtung, welche zum Empfang von vom wenigstens einen Radarsensor erzeugten Sensordaten mit diesem datenübertragend verbunden ist. Das erfindungsgemäße Fahrrad umfasst ferner wenigstens eine, vorzugsweise zwei, am Lenker angeordnete, voranstehend erläuterte erfindungsgemäßen Anzeigeeinrichtung(en) oder/und mit einem voranstehend erläuterten erfindungsgemäßen Fahrradhelm. In beiden Varianten ist/sind die Anzeigeeinrichtung(en) drahtlos oder drahtgebunden mit der Steuerungs-/Regelungseinrichtung verbunden, so dass die Steuerungs-/Regelungs-einrichtung deren Leuchtelemente in Abhängigkeit von den vom Radarsensor empfangenen Sensordaten ansteuern kann. Das erfindungsgemäße Fahrrad warnt den Fahrer vor hinter dem Fahrrad vorhandenen Verkehrsteilnehmern, so dass dieser auf damit etwaig einhergehende Gefahrensituationen reagieren kann. Dies reduziert die Gefahr von Unfällen mit diesen Verkehrsteilnehmern und bewirkt somit eine erhöhte Verkehrssicherheit.

Gemäß einer bevorzugten Ausführungsform ist die wenigstens eine Anzeigeeinrichtung so am Lenker angeordnet, dass der dem auf dem Sitz sitzende Fahrer die Leuchtelemente sehen kann. Gemäß einer bevorzugten Ausführungsform des erfindungsgemäßen Fahrrads steuert die Steuerungs-/Regelungseinrichtung wenigstens eines der Leuchtelemente so an, dass dieses betreffend die Emission von Licht seinen bisherigen Zustand ändert, wenn mittels des Radarsensors das Vorhandensein wenigstens eines Verkehrsteilnehmers detektiert wurde und vom wenigstens einen Radarsensor mit dieser Detektion korrespondierende Sensordaten an die Steuerungs-/Regelungseinrichtung übermittelt wurden. Mit "Zustandsänderung" ist insbesondere ein oben erläutertes Ein-, Aus- und Umschalten des jeweiligen Leuchtelements gemeint. Auf diese Weise kann der Benutzer des Fahrrads über das Vorhandensein eines solchen Verkehrsteilnehmers und eine damit unter Umständen einhergehende Gefahrensituation informiert werden. Unabhängig davon kann der Fahrer des Fahrrads diese Informationen bei der Steuerung des Fahrrads in jedem Fall berücksichtigen.

Besonders zweckmäßig kann der wenigstens eine Radarsensor so ausgebildet und am Fahrrad angeordnet sein, dass von diesem unterschieden werden kann, ob sich ein erkannter Verkehrsteilnehmer in einem seitlich linken Bereich hinter dem Fahrrad oder in einem seitlich rechten Bereich hinter dem Fahrrad oder in einem mittleren Bereich zwischen dem seitlich linken und rechten Bereich befindet. Somit kann durch geeignete Ansteuerung der Anzeigeeinrichtung der Fahrer des Fahrrads in Abhängigkeit von der erkannten Position darüber informiert werden, dass sich ein etwaig vorhandener Verkehrsteilnehmer links hinter dem Fahrrad bzw. rechts hinter dem Fahrrad bzw. in einer Position dazwischen befindet.

Gemäß einer bevorzugten Ausführungsform kann der Lenker eine linke und einen rechte Lenkerhälfte aufweisen, wobei an der linken oder/und rechten Lenkerhälfte (jeweils) eine Anzeigeeinrichtung angeordnet ist, deren Leuchtelemente von der Steuerungs-/Regelungseinrichtung steuerbar sind. Dies erlaubt es, bei Verwendung eines geeigneten Radarsensors, der wie voranstehend erläutert in der Lage ist, zu detektieren, ob sich ein erkannter Verkehrsteilnehmer hinten links, hinten rechts oder mittig am Fahrrad befindet, die beiden Anzeigeeinrichtungen eben in Abhängigkeit von der erkannten seitlichen Position des Verkehrsteilnehmers anzusteuern. So bietet es sich an, Leuchtelemente der an der linken Lenkerhälfte angeordneten Anzeigeeinrichtungen anzusteuern, wenn eine Position des Verkehrsteilnehmers links hinter dem Fahrrad erkannt wurde, und entsprechend Leuchtelemente der an der rechten Lenkerhälfte angeordneten Anzeigeeinrichtung anzusteuern, wenn eine Position des Verkehrsteilnehmers rechts hinter dem Fahrrad erkannt wurde. Beide Anzeigeeinrichtungen können gleichzeitig angesteuert werden, wenn erkannt wurde, dass sich der Verkehrsteilnehmer weder im linken noch im rechten Bereich, sondern dazwischen, also im Wesentlichen mittig hinter dem Fahrrad befindet.

Gemäß einer vorteilhaften Weiterbildung weist der Lenker einen linken und einen rechten Griff auf. Im Bereich wenigstens eines der beiden Griffe, vorzugsweise im Bereich beider Griffe, ist (jeweils) eine erfindungsgemäße Anzeigeeinrichtung angeordnet, deren Leuchtelemente von der Steuerungs-/Regelungseinrichtung steuerbar sind. Auch diese Variante erlaubt es, bei Verwendung eines geeigneten Radarsensors, der wie voranstehend erläutert in der Lage ist, zu detektieren, ob sich ein erkannter Verkehrsteilnehmer hinten links, hinten rechts oder mittig am Fahrrad befindet, die beiden Anzeigeeinrichtungen eben in Abhängigkeit von der erkannten seitlichen Position des Verkehrsteilnehmers anzusteuern. So bietet es sich an, Leuchtelemente der am linken Griff angeordneten Anzeigeeinrichtungen anzusteuern, wenn eine Position des Verkehrsteilnehmers links hinter dem Fahrrad erkannt wurde, und entsprechend Leuchtelemente der am rechten Griff angeordneten Anzeigeeinrichtung anzusteuern, wenn eine Position des Verkehrsteilnehmers rechts hinter dem Fahrrad erkannt wurde. Beide Anzeigeeinrichtungen können gleichzeitig angesteuert werden, wenn erkannt wurde, dass sich der Verkehrsteilnehmer weder im linken noch im rechten Bereich, sondern dazwischen, also im Wesentlichen mittig hinter dem Fahrrad befindet.

Gemäß einer vorteilhaften Weiterbildung können die Steuerungs-/Regelungs-einrichtung und der wenigstens eine Radarsensor als Baueinheit ausgeführt sein. Diese Variante ist besonders einfach am Fahrrad verbaubar und aufgrund ihres einfachen Aufbaus auch kostengünstig in der Herstellung.

Die Erfindung betrifft außerdem ein Verfahren zum Betreiben des voranstehend vorgestellten, erfindungsgemäßen Fahrrads, sodass die Vorteile des erfindungsgemäßen Fahrrads sich auch auf das erfindungsgemäße Verfahren übertragen. Beim erfindungsgemäßen Verfahren steuert die Steuerungs-/Regelungs-einrichtung wenigstens eines der Leuchtelemente, vorzugsweise mehrere oder alle der Leuchtelemente, der wenigstens einen Anzeigeeinrichtung so an, so dass betreffend die Emission von Licht seinen bisherigen Zustand ändert, wenn mittels des Radarsensors eine Zustandsänderung betreffend wenigstens einen Verkehrsteilnehmer im Bereich hinter dem Fahrrad detektiert wurde und mit dieser Zustandsänderung korrespondierende Sensordaten an die Steuerungs-/Regelungseinrichtung übermittelt werden.

Bevorzugt umfasst oder ist die vom Radarsensor erkannte Zustandsänderung ein erstmaliges Erkennen eines bestimmten Verkehrsteilnehmers, eine Positionsänderung, insbesondere eine Abstandsänderung, des erkannten Verkehrsteilnehmers relativ zum Fahrrad, oder ein Nicht-Mehr-Erkennen eines vorher bereits erkannten Verkehrsteilnehmers. Dadurch kann flexibel auf sich anbahnende Gefahrensituation bis hin zur "Entwarnung" reagiert werden.

Besonders bevorzugt wird beim erfindungsgemäßen Verfahren wenigstens ein Leuchtelement eingeschaltet oder ausgeschaltet oder umgeschaltet, wenn mittels des Radarsensors ein Verkehrsteilnehmer erkannt wird. Auf diese Weise wird der Fahrer über das Vorhandensein eines Verkehrsteilnehmers im rückwärtigen Bereich seines Fahrrads informiert, ohne dass er hierzu in regelmäßigen Zeitabständen den Kopf nach hinten wenden müsste, um den Bereich hinter seinem Fahrrad zu überwachen. Somit kann der Fahrer sich auf das Vorfeld seines Fahrrads konzentrieren.

Besonders bevorzugt kann beim erfindungsgemäßen Verfahren auch wenigstens ein Leuchtelement eingeschaltet oder ausgeschaltet oder umgeschaltet werden, wenn mittels des Radarsensors erkannt wird, dass sich der Abstand eines erkannten Verkehrsteilnehmers zum Fahrrad ändert, insbesondere reduziert. Auf diese Weise wird der Fahrer des Fahrrads vor der Gefahr einer Kollision mit dem sich nähernden Verkehrsteilnehmer hingewiesen, sodass er entsprechende Gegenmaßnahmen ergreifen kann.

Außerdem kann beim erfindungsgemäßen Verfahren bevorzugt wenigstens ein Leuchtelement eingeschaltet oder ausgeschaltet oder umgeschaltet werden, wenn ein mittels des Radarsensors bereits erkannter Verkehrsteilnehmer nicht mehr detektiert werden kann. Auf diese Weise wird der Fahrer des Fahrrads darüber informiert, dass von diesem Verkehrsteilnehmer keine Gefahr mehr ausgeht.

Gemäß einer vorteilhaften Weiterbildung des erfindungsgemäßen Verfahrens steuert die Steuerungs-/Regelungseinrichtung zum Einschalten/Ausschalten/Umschalten wenigstens eines Leuchtelements die am linken Griff angeordnete Anzeigeeinrichtung an, wenn mittels des Radarsensors erkannt wurde, dass sich der erkannte bzw. betreffende Verkehrsteilnehmer im seitlich linken Bereich hinter dem Fahrrad befindet. Entsprechend steuert die Steuerungs-/Regelungs-einrichtung zum Einschalten/Ausschalten/Umschalten wenigstens eines Leuchtelements die am rechten Griff angeordnete Anzeigeeinrichtung an, wenn mittels des Radarsensors erkannt wurde, dass sich der erkannte bzw. betreffende Verkehrsteilnehmer im seitlich rechten Bereich hinter dem Fahrrad befindet. Schließlich kann die Steuerungs-/Regelungseinrichtung zum Einschalten/Ausschalten/Umschalten wenigstens eines Leuchtelements sowohl die am linken Griff angeordnete Anzeigeeinrichtung als auch die am rechten Griff angeordnete Anzeigeeinrichtung ansteuern, also wenigstens zwei Leuchtelemente ein- oder aus- oder umschalten, wenn mittels des Radarsensors erkannt wurde, dass der Verkehrsteilnehmer sich in einem (mittleren) Bereich zwischen dem linken und rechten Bereich hinter dem Fahrrad befindet. Diese Weiterbildung des Verfahrens erlaubt es, den Fahrer des Fahrrads auf einfache Weise auch über die seitliche Position eines im rückwärtigen Bereich des Fahrrads vorhandenen Verkehrsteilnehmers zu informieren. Dies erleichtert es dem Fahrer des Fahrrads, auf diesen Verkehrsteilnehmer adäquat zu reagieren, da er seine seitliche Position hinter dem Fahrrad kennt. Die hier vorgeschlagene Ansteuerung der am linken Griff angeordneten Anzeigeeinrichtung, wenn ein Verkehrsteilnehmer im Bereich hinten links hinter dem Fahrrad erkannt wurde, sowie der am rechten Griff angeordneten Anzeigeeinrichtung, wenn ein Verkehrsteilnehmer im Bereich hinten rechts erkannt wurde, ist für den Fahrer des Fahrrads auch besonders intuitiv.

Gemäß einer weiteren bevorzugten Ausführungsform wird mittels der Steuerungs-/Regelungseinrichtung in Abhängigkeit von der erkannten Zustandsänderung des Verkehrsteilnehmers durch Ansteuerung wenigstens eines, vorzugsweise mehrerer oder aller der Leuchtelemente eines oder mehreres aus Folgendem variiert:
- Farbe des emittierten Lichts,
- Helligkeit des emittierten Lichts,
- Blinkfrequenz des emittierten Lichts,
- Anzahl der Licht emittierenden Leuchtelemente.

Auf diese Weise kann unterschiedlichen Verkehrssituationen, besondere Gefahrensituationen, eine individuelle, charakteristische Anzeigeform zugeordnet werden, sodass der Fahrer des Fahrrads intuitiv erfassen kann, welche Art der Verkehrs- bzw. Gefahrensituation vorliegt.

Gemäß einer weiteren bevorzugten Ausführungsform erzeugt die Steuerungs-/Regelungseinrichtung in Abhängigkeit von der erkannten Zustandsänderung durch Ansteuerung wenigstens einer Anzeigeeinrichtung eine vorbestimmte Lichtsequenz, bei welcher Farbe oder/und Helligkeit oder/und Blinkfrequenz des von der Anzeigeeinrichtungen emittierten Lichts bei einer, mehreren oder allen Leuchtelementen dieser Anzeigeeinrichtung nacheinander in einer vordefinierten Weise geändert werden. Diese Weiterbildung des erfindungsgemäßen Verfahrens erlaubt es, den Fahrer über eine Vielzahl von unterschiedlichen Verkehrssituationen, die sich hinter seinem Fahrrad zutragen können, zu informieren. Dies kann insbesondere die Anzahl an verschiedenen erkannten Verkehrsteilnehmer, die Art des erkannten Verkehrsteilnehmers - beispielsweise ein Kraftfahrzeug, insbesondere ein Personenfahrzeug oder Nutzfahrzeug, ein Zweirad, insbesondere ein Motorrad oder ein weiteres Fahrrad oder einen Fußgänger - betreffen.

Durch entsprechende Festlegung einer bestimmten Lichtsequenz ist es aber auch möglich, den Fahrer über den Abstand des betreffenden Verkehrsteilnehmers zum Fahrrad, insbesondere eine Abstandsänderung zum Fahrrad, sowie seine Geschwindigkeit, absolut oder relativ zum Fahrrad, zu informieren. Es ergeben sich vielfältigste Ausgestaltungsmöglichkeiten und somit maximale Flexibilität. Besonders bevorzugt sind unterschiedliche Zustandsänderungen unterschiedlichen vorbestimmten Lichtsequenzen zugeordnet. Auf diese Weise kann unterschiedlichen Verkehrssituationen, insbesondere Gefahrensituationen, eine individuelle Lichtsequenz zugeordnet werden, sodass der Fahrer des Fahrrads leichter erkennen kann, welche Art von Verkehrs- bzw. Gefahrensituation vorliegt.

Aus voranstehenden Erläuterungen ergibt sich, dass die Steuerungs-/Regelungseinrichtung des oben vorgestellten erfindungsgemäßen Fahrrads zweckmäßig zur Durchführung des voranstehend erläuterten, erfindungsgemäßen Verfahrens eingerichtet/programmiert ist.

Weitere Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: ein Beispiel einer erfindungsgemäßen Anzeigeeinrichtung,
- Fig. 2: ein Beispiel eines erfindungsgemäßen Fahrrads mit zwei erfindungsgemäßen Anzeigeeinrichtungen,
- Fig. 3: ein Beispiel eines erfindungsgemäßen Fahrradhelms in einer Draufsicht.

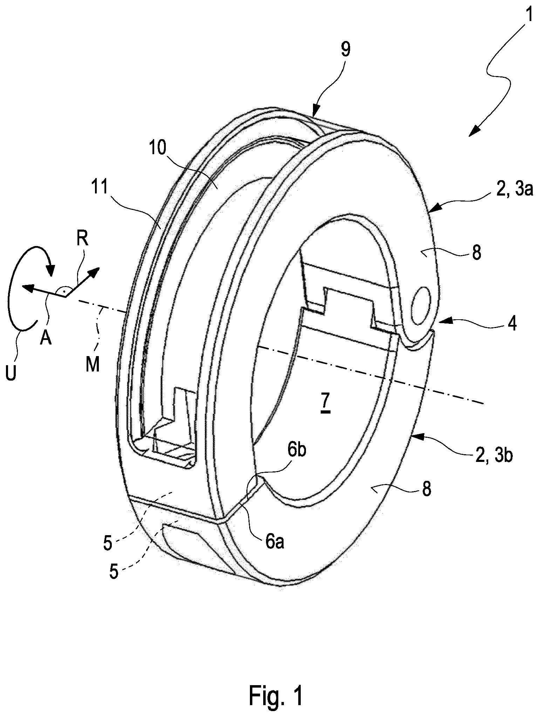

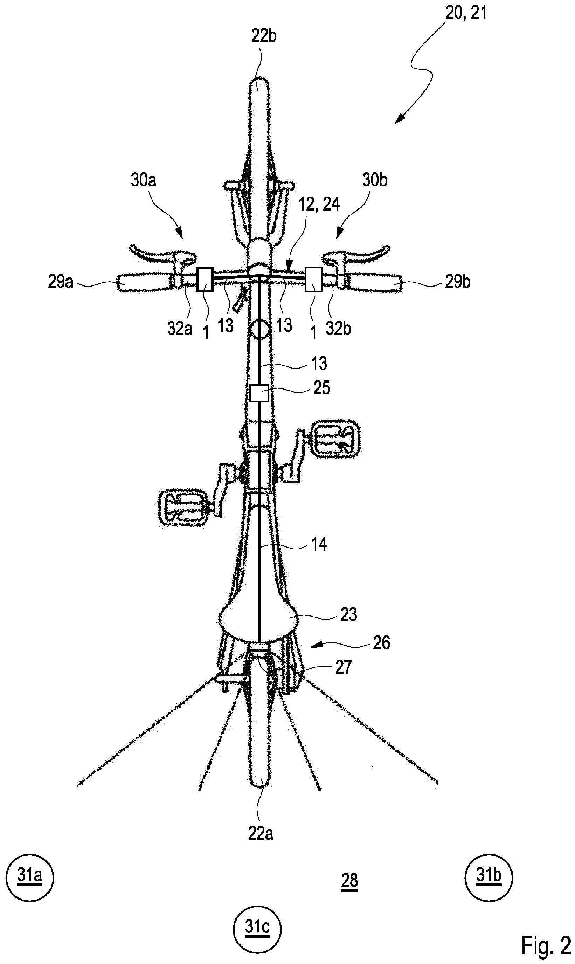

Die Figur 1 illustriert in perspektivischer Darstellung ein Beispiel einer erfindungsgemäßen Anzeigeeinrichtung 1 für ein Fahrrad 20 (in Figur 1 nicht gezeigt), bei welchem es sich um ein "Pedelec" 21 (vgl. Figur 2) handeln kann, wie dieses in Figur 2gezeigt ist.

Gemäß Figur 1 umfasst die Anzeigeeinrichtung 1 einen ringförmigen bzw. hohlzylindrischen Träger 2, der zum Anbringen der Anzeigeeinrichtung 1 an einem Lenker 24 des Fahrrads 20 ausgebildet ist. Eine Mittellängsachse M erstreckt sich entlang einer axialen Richtung A. Eine radiale Richtung R erstreckt sich senkrecht zur axialen Richtung A von der Mittellängsachse M weg. Eine Umfangsrichtung U läuft senkrecht zur axialen Richtung A und auch senkrecht zur radialen Richtung R um die Mittellängsachse M um. Der ringförmige Träger 2 fasst eine Ringöffnung 7 ein, welche der Lenker 24 - bei diesem handelt es sich typischerweise um einen Rohrkörper bzw. eine Lenkstange (in Figur 1 nicht gezeigt) - in einem am Fahrrad 20 montierten Zustand der Anzeigeeinrichtung 1 durchgreift. Außenseitig am Träger 2 ist eine Mehrzahl von elektrisch steuerbaren Leuchtelementen 10 - im Beispiel der Figuren handelt es sich bei diesen um Licht emittierende Dioden (LED) - zum Emittieren von Licht angeordnet.

Wie Figur 1 veranschaulicht, kann der ringförmige Träger 2 zweiteilig ausgebildet sein und zwei jeweils ringsegmentförmige, vorzugsweise jeweils halbringförmige, Träger-Elemente 3a, 3b umfassen. Die beiden Träger-Elemente 3a, 3b sind mittels eines Scharniers 4 gelenkig miteinander verbunden. Somit können sie zwischen einer in Figur 1 gezeigten Schließstellung, in welcher die beiden Träger-Elemente 3a, 3b die Ringöffnung 7 vollständig umlaufend einfassen, und einer Offenstellung (in Figur nicht gezeigt) verstellt werden, in welcher sie am Lenker 24 des Fahrrads 20 montiert oder von diesem demontiert werden können.

Zum Fixieren der Anzeigeeinrichtung 1 am Lenker 24 umfasst der Träger 2 eine Fixiereinrichtung 5, die an den beiden vom Scharnier 4 abgewandten Umfangsenden 6a, 6b der Träger-Elemente 3a, 3b angeordnet ist und mittels welcher die beiden Träger-Elemente 3a, 3b in der Schließstellung aneinander fixiert werden können. Bei dieser Fixiereinrichtung 5 kann es sich um eine in dem Schließzustand der Figur 1 nicht näher erkennbare Rastvorrichtung handeln, bei welcher die beiden Träger-Elemente 3a, 3b in der Schließstellung des Trägers 2 lösbar miteinander verrastet werden können.

Im Beispiel der Figur 1 sind die gezeigten Leuchtelemente auf einer Außenumfangsseite 9 von einem der beiden der beiden Träger-Elemente 3a, 3b, und zwar dem Träger-Elemente 3a, angeordnet. Es ist insbesondere denkbar, dass alle Leuchtelemente 10 der Anzeigeeinrichtung 1 auf der Außenumfangsseite 9 von einem oder von beiden Träger-Elementen 3a, 3b angeordnet sind. Denkbar ist es aber auch, dass die Leuchtelemente 10 zumindest teilweise auf einer Stirnseite 8 von einem oder beiden der Träger-Elemente 3a, 3b angeordnet sind. Zweckmäßig wird in beiden Varianten die Anzeigeeinrichtung 1 so am Lenker 24 des Zweirads 2 montiert, dass der Fahrer bzw. Benutzer des Fahrrads 20 diese auch sehen kann und somit auch wahrnimmt, ob. bzw. wenn diese Licht emittieren. Denkbar ist weiterhin eine Kombination der beiden voranstehend erläuterten Varianten (nicht gezeigt). In diesem Fall können alle Leuchtelemente 10 entweder umfangsseitig oder stirnseitig am Träger 2 angeordnet sind. Alternativ dazu kann ein erster Teil der Leuchtelemente 10 umfangsseitig und ein zweiter Teil der Leuchtelemente 10 stirnseitig am Träger 2 angeordnet sein.

Die Leuchtelemente 10 sind in allen genannten Varianten separat ansteuerbar ausgebildet. Hierzu kann am Träger 2 ein in den Figuren nicht dargestellte elektrischer Anschluss vorgesehen sein, mittels welchem die Leuchtelemente 10 drahtgebunden elektrisch mit einer Steuerungs-/Regelungseinrichtung 25 des Fahrrads 20 verbunden werden können. Denkbar ist in einer Variante auch eine drahtlose Kommunikationsverbindung zwischen Steuerungs-/Regelungseinrichtung 25 und Fahrrad 20. Alle vorhandenen Leuchtelemente 10 sind so ausgebildet, dass sie nicht nur einzeln ansteuerbar sind, sondern auch jeweils Licht unterschiedlicher Farben und unterschiedlicher Helligkeit emittieren können.

Wie Figur 1 des Weiteren erkennen lässt, können die Leuchtelemente 10 mittels einer für das von den Leuchtelementen 10 emittierte Licht lichtdurchlässigen Schutzabdeckung 11 abgedeckt sein. Als Material für eine solche Schutzabdeckung 10 kommt etwa ein geeigneter, für das Licht der Leuchtelemente 10 durchlässiger Kunststoff in Betracht.

Die Figur 2 zeigt in schematischer, stark vereinfachter Darstellung eine Draufsicht auf ein erfindungsgemäßes Fahrrad 20, in welchem zwei voranstehend erläuterte erfindungsgemäße Anzeigeeinrichtungen 1 verbaut sind. Das Fahrrad 20 umfasst ein Hinterrad 22a und ein vom Fahrer des Fahrrads 20 lenkbares Vorderrad 22b. Ferner umfasst das Fahrrad 20 einen Sitz 23, auf welchem der Benutzer des Fahrrads 20 sitzen kann. Weiterhin umfasst das Fahrrad 20 einen Lenker 24 zum Steuern des Vorderrads 22b, wobei am Lenker 24 die beiden Anzeigeeinrichtungen 1 angeordnet sind. Der Lenker 24 weist eine durch einen Rohrkörper gebildet Lenkstange 12 auf und besitzt eine linke und eine rechte Lenkerhälfte 32a, 32b, an welcher ein linker bzw. rechter Griff 29a, 29b vorgesehen ist.

Eine der beiden Anzeigeeinrichtungen 1 ist im Bereich 30a des linken Griffs 29a und somit in der linken Lenkerhälfte 32a angeordnet, die andere der beiden Anzeigeeinrichtungen 1 ist im Bereich 30b des rechten Griffs 29b und somit in der rechen Lenkerhälfte 32b angeordnet. Die Befestigung der beiden Anzeigeeinrichtungen 1 am Lenker 24, die als Lenkstange 12 bzw. Rohrkörper ausgebildet ist, erfolgt wie voranstehend anhand der Figur 1 erläutert und ist in Figur 2 der Übersichtlichkeit halber nicht näher dargestellt.

Das Fahrrad 20 umfasst außerdem einen in einem hinteren Bereich 26 des Fahrrads angeordneten Radarsensor 27. Mittels des Radarsensors 27 kann ein sich hinten an das Fahrrad 20 anschließender hinterer Umgebungsbereich 28 des Fahrrads 20 auf das Vorhandensein von Verkehrsteilnehmern überwacht werden. Der Radarsensor 27 ist so ausgebildet und am Fahrrad 20 angeordnet, dass von diesem erkannt und unterschieden werden kann, ob sich ein erkannter Verkehrsteilnehmer in einem seitlich linken Bereich 31a hinter dem Fahrrad 20 oder in einem seitlich rechten Bereich 31b hinter dem Fahrrad 20 oder in einem (mittleren) Bereich 31c zwischen dem seitlich linken und rechten Bereich 31a, 31b befindet.

Des Weiteren umfasst das Fahrrad 20 eine Steuerungs-/Regelungseinrichtung 25, welche zum Empfang von vom Radarsensor 27 erzeugten Sensordaten mit diesem datenübertragend (in Figur 2 schematisch angedeutet durch eine mit dem Bezugszeichen 14 versehenen Verbindungslinie) verbunden ist und zum Ansteuern der Mehrzahl der Leuchtelemente 10 in Abhängigkeit von den empfangenen Sensordaten eingerichtet ist. Hierzu ist die Steuerungs-/Regelungseinrichtung 25 mit den beiden Anzeigeeinrichtungen 1 elektrisch, also drahtgebunden, oder alternativ dazu drahtlos, verbunden, was in Figur 2 durch eine mit dem Bezugszeichen 13 bezeichnete Verbindungslinie schematisch angedeutet werden soll.

Im Beispiel der Figur 2 sind die Steuerungs-/Regelungseinrichtung 25 und der Radarsensor 27 separat zueinander ausgebildet und an verschiedenen Stellen im Fahrrad 20 verbaut, sodass die Steuerungs-/Regelungseinrichtung 25 im Abstand zum Radarsensor 27 angeordnet ist. In einer bevorzugten Variante, die besonders einfach aufgebaut und somit kostengünstig in der Herstellung ist, können die Steuerungs-/Regelungseinrichtung 25 und der Radarsensor 27 aber auch als Baueinheit ausgeführt sein. In diesem Fall ist die Steuerungs-/Regelungs-einrichtung 25 an derselben Position im Fahrrad 20 angeordnet wie der Radarsensor 27.

In voranstehend erläuterter Konfiguration des Fahrrads 20 kann die Steuerungs-/Regelungseinrichtung 25 die in den beiden Anzeigeeinrichtungen 1 vorgesehenen Leuchtelemente 10 individuell so ansteuern, dass das jeweilige Leuchtelement 10 betreffend die Emission von Licht seinen bisherigen Zustand ändert, wenn mittels des Radarsensors 27 das Vorhandensein wenigstens eines Verkehrsteilnehmers detektiert wurde und infolgedessen vom Radarsensor 27 mit dieser Detektion korrespondierende Sensordaten an die Steuerungs-/Regelungseinrichtung 25 übermittelt wurden.

Die anhand der Figur 2 erläuterte Steuerungs-/Regelungs-einrichtung 25 des Fahrrads 20 ist zur Durchführung des erfindungsgemäßen Verfahrens zum Betreiben des Fahrrads 20 ausgebildet. Im Folgenden wird das Verfahren beispielhaft erläutert anhand des Fahrrads 20 der Figur 2 mit den beiden am Lenker 24 angeordneten Anzeigeeinrichtungen 1 erläutert.

Gemäß dem Verfahren steuert die Steuerungs-/Regelungseinrichtung 25 wenigstens eines der Leuchtelemente 10, vorzugsweise mehrere oder alle der Leuchtelemente 10, der Anzeigeeinrichtungen 1 so an, dass dieses betreffend die Emission von Licht seinen bisherigen Zustand ändert, wenn mittels des Radarsensors 27 eine Zustandsänderung betreffend einen Verkehrsteilnehmer erkannt und mit dieser Zustandsänderung korrespondierende Sensordaten an die Steuerungs-/Regelungseinrichtung 25 übermittelt werden. Eine vom Radarsensor 27 erkannte Zustandsänderung kann dabei ein erstmaliges Erkennen eines bestimmten Verkehrsteilnehmers, eine Positionsänderung eines erkannten Verkehrsteilnehmers, insbesondere eine Abstandsänderung, des erkannten Verkehrsteilnehmers relativ zum Fahrrad 20 sowie ein Nicht-Mehr-Erkennen eines bereits erkannten Verkehrsteilnehmers sein. In Reaktion auf die vom Radarsensor 27 empfangenen Sensordaten erzeugt die Steuerungs-/Regelungseinrichtung 25 in Abhängigkeit von der erkannten Zustandsänderung durch Ansteuerung verschiedener der in den beiden Anzeigeeinrichtungen 1 vorhandenen Leuchtelemente 10 eine vorbestimmte Lichtsequenz aus von diesen Leuchtelementen 10 emittiertem Licht.

Im Beispiel der Figur 2, bei welcher am Lenker zwei verschiedene Anzeigeeinrichtungen 1 vorgesehen sind, die von der Steuerungs-/Regelungseinrichtung 25 angesteuert werden können, steuert die Steuerungs-/Regelungseinrichtung 25 Leuchtelemente 10 der linken, also im linken Bereich 30a am linken Griff 29a angeordnete Anzeigeeinrichtung 1, an, d.h. sie schaltet diese Leuchtelemente 10 ein oder aus oder um, wenn vom Radarsensor 27 erkannt wurde, dass sich der erkannte Verkehrsteilnehmer im seitlich linken Bereich 31a hinter dem Fahrrad 20 befindet. Entsprechend steuert die Steuerungs-/Regelungseinrichtung 25 Leuchtelemente die Leuchtelemente 10 der rechten, also im rechten Bereich 30b am rechten Griff 29b angeordnete Anzeigeeinrichtung 1 an, d.h. sie schaltet diese ein oder aus oder um, wenn vom Radarsensor 27 erkannt wurde, dass sich der erkannte Verkehrsteilnehmer im seitlich rechten Bereich 31b hinter dem Fahrrad 20 befindet. Außerdem steuert die Steuerungs-/Regelungseinrichtung sowohl Leuchtelemente 10 der im linken Bereich 30a am linken Griff 20a angeordneten Anzeigeeinrichtung 1 als auch Leuchtelemente 10 der im rechten Bereich 30b am rechten Griff 29b angeordneten Anzeigeeinrichtung 1 an, wenn vom Radarsensor 27 erkannt wurde, dass sich der betreffende Verkehrsteilnehmer im mittleren Bereich 31c zwischen dem linken und rechten Bereich 31a, 31b hinter dem Fahrrad 20 befindet.

Im einfachsten Fall wird ein Leuchtelement 10 bzw. werden dabei mehrere oder alle Leuchtelemente 10 einer oder beider Anzeigeeinrichtungen 1 eingeschaltet oder ausgeschaltet oder umgeschaltet, wenn mittels des Radarsensors 27 ein Verkehrsteilnehmer erstmals erkannt wird. Ebenso kann ein Leuchtelement 10 bzw. können mehrere oder alle Leuchtelemente 10 einer oder beider Anzeigeeinrichtungen 1 eingeschaltet oder ausgeschaltet oder umgeschaltet werden, wenn mittels des Radarsensors 27 erkannt wird, dass sich der Abstand eines erkannten Verkehrsteilnehmers zum Fahrrad 20 ändert, insbesondere reduziert. Alternativ oder zusätzlich kann ein Leuchtelement 10 bzw. können mehrere oder alle Leuchtelemente 10 einer oder beider Anzeigeeinrichtungen 1 eingeschaltet oder ausgeschaltet oder umgeschaltet werden, wenn ein mittels des Radarsensors 27 bereits erkannter Verkehrsteilnehmer nicht mehr detektiert werden kann.

Mit "Einschalten" ist dabei gemeint, dass ein vorher kein Licht emittierende Leuchtelement 10 in einen Zustand versetzt wird, in welchem es nunmehr Licht emittiert. Mit "Ausschalten" ist vorliegend gemeint, dass ein bereits Licht emittierendes Leuchtelement 10 in einen Zustand versetzt wird, in welchem es nunmehr kein Licht mehr emittiert. Mit "Umschalten" ist vorliegend gemeint, dass die Art der Lichtemission geändert wird. Damit kann insbesondere gemeint sein, dass die Farbe oder/und die Helligkeit des vom Leuchtelement emittierten Lichts geändert werden, wenn das Leuchtelement 10 zur Emission von Licht unterschiedlicher Farben ausgebildet ist.

Weiterbildend kann mittels der Steuerungs-/Regelungseinrichtung 25 in Abhängigkeit von der erkannten Zustandsänderung durch Ansteuerung wenigstens eines, vorzugsweise mehrerer oder aller der Leuchtelemente 10 der betreffenden Anzeigeeinrichtung 1 eines oder mehreres aus folgendem variiert werden: - Farbe des emittierten Lichts; - Helligkeit des emittierten Lichts; -Blinkfrequenz des emittierten Lichts, - Anzahl der Licht wie voranstehend beschrieben Licht emittierenden Leuchtelemente. Auf diese Weise kann unterschiedlichen Verkehrssituationen, besondere Gefahrensituationen, eine individuelle Anzeige zugeordnet werden, sodass der Fahrer des Fahrrads leichter erkennen kann erkennt, welche Verkehrs- bzw. Gefahrensituation vorliegt.

Außerdem kann die Steuerungs-/Regelungseinrichtung 25 dazu ausgebildet sein, in den Anzeigeeinrichtungen 1 vorbestimmte Lichtsequenzen zu erzeugen. Somit kann die Steuerungs-/Regelungseinrichtung 25 in Abhängigkeit von der mittels des Radarsensors 27 erkannten Zustandsänderung durch Ansteuerung der jeweiligen Anzeigeeinrichtung 1 in den Leuchtelementen dieser Anzeigeeinrichtung eine vorbestimmte Lichtsequenz erzeugen, bei welcher Farbe oder/und Helligkeit oder/und Blinkfrequenz des von der Anzeigeeinrichtung 1 bzw. deren Leuchtelementen 10 emittierten Lichts bei einer, mehreren oder allen Leuchtelementen 10 der Anzeigeeinrichtungen nacheinander, also als Funktion der Zeit, in einer vordefinierten Weise geändert werden. Besonders bevorzugt sind unterschiedlichen verschiedenen Zustandsänderungen unterschiedliche vorbestimmte Lichtsequenzen zugeordnet.

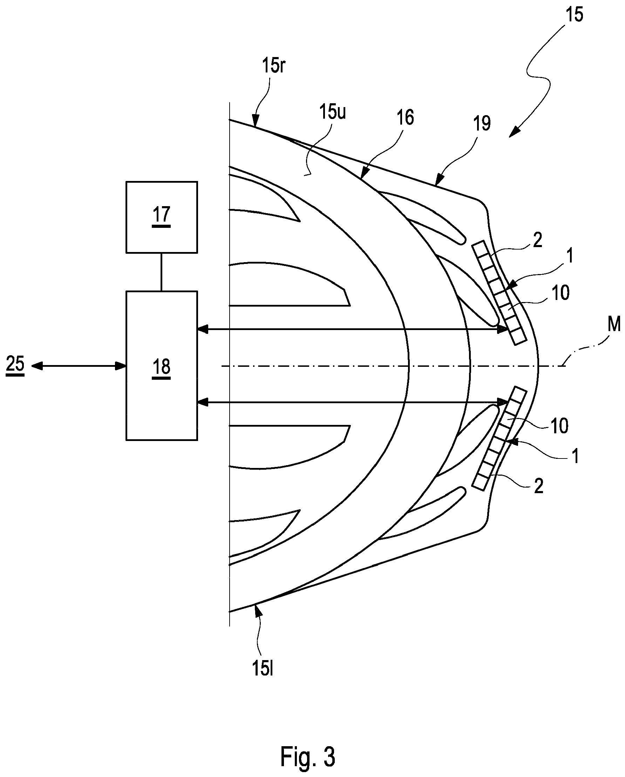

Die Figur 3 illustriert ein Beispiel eines erfindungsgemäßen Fahrradhelms 15 zur Verwendung mit dem erfindungsgemäßen Fahrrad 20 und zum Schutz der den Helm tragenden Person vor Kopfverletzungen, wenn diese das Fahrrad 20 benutzt. Der Fahrradhelm 15 umfasst einen in herkömmlicher Weise schalenartig ausgebildeten Helmkörper 16 zum Absorbieren von äußeren mechanischen Stößen und Schlägen. Der Fahrradhelm 15 umfasst außerdem ein am Helmkörper 16 angebrachtes Helmvisier 19. Die Figur 1 zeigt den Helm bzgl. einer Gebrauchslage, in welcher der Helmträger den Fahrradhelm 15 auf seinem Kopf trägt, in einer Draufsicht auf seine Unterseite 15u des Helms 15. Man erkennt zwei auf dem Helmvisier 19 nebeneinander angeordnete erfindungsgemäße Anzeigeeinrichtungen 1, jeweils mit Träger 2 und Leuchtelementen 10. Dieser Träger 2 kann mechanisch starr oder aber auch als elastisches Band ausgeführt sein, wobei letztere Ausführung leichter an unebene Helmvisiere 19 angepasst werden kann. Die beiden Anzeigeeinrichtungen 1 sind so auf dem Helmvisier 19 angeordnet, dass sie für den Helmträger während des Tragens des Fahrradhelms15 auf seinem Kopf sichtbar sind. Somit kann der Helmträger erkennen, ob bzw. wenn die Leuchtelemente 10 Licht emittieren.

Der Fahrradhelm 15 umfasst des Weiteren einen in Figur 3 nur schematisch angedeuteten elektrischen Energiespeicher 17 zum Versorgen der Anzeigeeinrichtungen mit elektrischer Energie. Der Energiespeicher 17 kann eine - bevorzugt wiederaufladbare - elektrische Batterie sein, die besonders bevorzugt in den Helmkörper 16 integriert sein kann. Ebenfalls nur schematisch angedeutet ist eine Kommunikationseinheit 18 des Fahrradhelms 15 zum drahtlosen Verbinden der Anzeigeeinrichtungen 1 mit der Steuerungs-/Regelungseinrichtung 25 des Fahrrads 20.

Wie Figur 3 anschaulich belegt, weist der Fahrradhelm 15 eine Mittellängsachse M auf, welche den Fahrradhelm 15 in eine linke und in eine rechte Helmhälfte 15l, 15r unterteilt. Dabei eine der beiden Anzeigeeinrichtung 1 in der linken Helmhälfte 15l am Helmvisier 19 angeordnet und die andere Anzeigeeinrichtung 1 in der rechten Helmhälfte 15r am Helmvisier 19 angeordnet. Die Funktionsweise der beiden am Fahrradhelm 15 vorhandenen Anzeigeeinrichtungen 1 gemäß Figur 3 entspricht jener der beiden am Lenker 24 vorgesehenen Anzeigeeinrichtungen 1 gemäß Figur 2.

Das voranstehend erläuterte Verfahren kann auch unter Verwendung des erfindungsgemäßen Fahrradhelms 15 eingesetzt werden, wobei die beiden am Helmvisier 19 links und rechts vorgesehenen Anzeigeeinrichtungen 1 die gleiche Funktion übernehmen, wie die beim Fahrrad 20 der Figur 2 im Bereich 30a bzw. 30b des linken bzw. rechten Griffs 29a bzw. 29b angeordneten Anzeigeeinrichtungen 1. In diesem Fall besteht zwischen Steuerungs-/Regelungseinrichtung 25 des Fahrrads 20 und dem Fahrradhelm 15 keine drahtgebundene Verbindung zur elektrischen Signalübertragung zwischen Anzeigeeinrichtung 1 und Steuerungs-/Regelungseinrichtung 25, sondern eine drahtlose Kommunikationsverbindung, die eine Datenübertragung zwischen der Kommunikationseinheit 18 und einer - beispielsweise in die Steuerungs-/Regelungseinrichtung 25 integrierte Kommunikationseinheit (nicht gezeigt) zur drahtlosen Kommunikation zwischen den am Fahrradhelm 15 vorhandenen Anzeigeeinrichtungen 1 und der Steuerungs-/Regelungseinrichtung 25 des Fahrrads 20 ermöglicht. Wird der erfindungsgemäße Fahrradhelm 15 mit dem beide Anzeigeeinrichtungen 1 verwendet, so kann also die Steuerungs-/Regelungseinrichtung 25 des Fahrrads 20 nicht nur die am Lenker 24 vorgesehenen beiden Anzeigeeinrichtungen 1 ansteuern, sondern zusätzlich - oder auch alternativ - die beiden am Helmvisier 19 des Fahrradhelms 15 angeordneten Anzeigeeinrichtungen 1. Dies bedeutet, dass die Steuerungs-/Regelungseinrichtung 25 die im Bereich 30a des linken Griffs 29a angeordnete Anzeigeeinrichtung 1 in analoger Weise zur links am Helmvisier 19 vorgesehenen Anzeigeeinrichtungen 1 ansteuern kann, und in analoger Weise die im Bereich 30b des rechten Griffs 29b angeordnete Anzeigeeinrichtungen 1 in analoger Weise zur rechts am Helmvisier 19 vorgesehenen Anzeigeeinrichtungen 1 ansteuern kann.

In einem solchen Szenario steuert die Steuerungs-/Regelungseinrichtung 25 die Leuchtelemente 10 der am Helmvisier 19 links angeordneten Anzeigeeinrichtung 1 an, d.h. sie schaltet diese ein oder aus oder um, wenn vom Radarsensor 27 erkannt wurde, dass sich der erkannte Verkehrsteilnehmer im seitlich linken Bereich 31a hinter dem Fahrrad 20 befindet. Entsprechend steuert die Steuerungs-/Regelungseinrichtung 25 die Leuchtelemente 10 der am Helmvisier 19 rechts angeordnete Anzeigeeinrichtung 1 an, d.h. sie schaltet diese ein oder aus oder um, wenn vom Radarsensor 27 erkannt wurde, dass sich der erkannte Verkehrsteilnehmer im seitlich rechten Bereich 31b hinter dem Fahrrad 20 befindet. Entsprechend steuert die Steuerungs-/Regelungseinrichtung 25 sowohl Leuchtelemente 10 der linken Anzeigeeinrichtung 1 als auch Leuchtelemente 10 der rechten Anzeigeeinrichtung 1 an, wenn vom Radarsensor 27 erkannt wurde, dass sich der Verkehrsteilnehmer im mittleren Bereich 31c zwischen dem linken und rechten Bereich 31a, 31b hinter dem Fahrrad 20 befindet.

Selbstverständlich ist es auch ohne weiteres denkbar, am Lenker 24 des Fahrrads 20 auf jedwede Anzeigeeinrichtungen 1 zu verzichten und stattdessen ausschließlich die am Fahrradhelm 15 vorgesehenen Anzeigeeinrichtungen 1 zu verwenden.

In jedem Fall gelten voranstehend erläuterte Verfahrensaspekte, welche die Steuerung der beiden am Lenker 24 vorgesehenen Anzeigeeinrichtungen 1 betreffen, mutatis mutandis auch für die beiden am Fahrradhelm 15 vorgesehenen Anzeigeeinrichtungen 1.

## Patentansprüche

1. Anzeigeeinrichtung (1) für ein Fahrrad (20), bevorzugt für ein Pedelec (21), oder/und für einen Fahrradhelm (25),
- mit einem Träger (2) zum Anbringen an einem Lenker (24) des Fahrrads (20) oder zum Anbringen an einem Fahrradhelm,
- wobei auf dem Träger (2) eine Mehrzahl an steuerbaren Leuchtelementen (10) zum Emittieren von Licht angeordnet ist.

2. Anzeigeeinrichtung nach Anspruch 1,
**dadurch gekennzeichnet, dass**
der Träger (2) eine ringförmige bzw. hohlzylindrische Geometrie aufweist und zum Anbringen an einem Lenker (24) des Fahrrads (20)zweiteilig ausgebildet ist und zwei jeweils ringsegmentförmige, vorzugsweise jeweils halbringförmige, Träger-Elemente (3a, 3b) umfasst, die mittels eines Scharniers (4) gelenkig miteinander verbunden und zwischen einer Schließstellung, in welchem die beiden Träger-Elemente (3a, 3b) eine Ringöffnung (7) einfassen, und einer Offenstellung verstellbar sind, in welchem sie am Fahrrad (20), insbesondere an einem Lenker (24) des Fahrrads (20), montiert oder von diesem demontiert werden können.

3. Anzeigeeinrichtung nach Anspruch 1 oder 2,
**dadurch gekennzeichnet, dass**
der Träger (2) eine Fixiereinrichtung (5) umfasst, die an den beiden vom Scharnier (4) abgewandten Umfangsenden (6a, 6b) der Träger-Elemente (3a, 3b) angeordnet ist und mittels welcher die beiden Träger-Elemente (3a, 3b) in der Schließstellung aneinander fixierbar oder fixiert sind.

4. Anzeigeeinrichtung nach einem der Ansprüche 1 bis 3,
**dadurch gekennzeichnet, dass**
wenigstens ein Leuchtelement (10) auf einer, vorzugsweise genau einer, Stirnseite (8) des Trägers (2), insbesondere wenigstens eines der beiden Träger-Elemente (3a, 3b) angeordnet ist.

5. Anzeigeeinrichtung nach einem der vorhergehenden Ansprüche,
**dadurch gekennzeichnet, dass**
wenigstens ein Leuchtelement (10) auf einer Außenumfangsseite (9) des Trägers (2), insbesondere wenigstens eines der beiden Träger-Elemente (3a, 3b), angeordnet ist; oder dass
- alle Leuchtelemente (10) entweder stirnseitig am Träger (2) angeordnet sind; oder dass
- ein erster Teil der Leuchtelemente (10) umfangsseitig und ein zweiter Teil der Leuchtelemente (10) stirnseitig am Träger (2) angeordnet ist, wobei vorzugsweise die mehreren Leuchtelemente (10) aus dem ersten Teil und dem zweiten Teil bestehen.

6. Anzeigeeinrichtung nach einem der vorhergehenden Ansprüche,
**dadurch gekennzeichnet, dass**
- am Träger (2) ein elektrischer Anschluss vorgesehen ist, mittels welchem die Leuchtelemente (10) drahtgebunden elektrisch mit einer Steuerungs-/Regelungseinrichtung (25) des Fahrrads (20) verbunden werden können.

7. Anzeigeeinrichtung nach einem der vorhergehenden Ansprüche,
**dadurch gekennzeichnet, dass**
die Leuchtelemente (10) separat ansteuerbar ausgebildet sind.

8. Anzeigeeinrichtung nach einem der vorhergehenden Ansprüche,
**dadurch gekennzeichnet, dass**
die Leuchtelemente (10) mittels einer für das von den Leuchtelementen (10) emittierte Licht lichtdurchlässigen Schutzabdeckung (11) abgedeckt sind; oder/und dass
- wenigstens eines, bevorzugt mehrere, besonders bevorzugt alle der Leuchtelemente (10) so ausgebildet ist/sind, dass es wahlweise Licht mit einer von wenigstens zwei verschiedenen Farben emittieren kann;
- wenigstens eines, bevorzugt mehrere, besonders bevorzugt alle der Leuchtelemente (10) so ausgebildet ist/sind, dass es Licht mit unterschiedlicher Helligkeit emittieren kann;

9. Fahrradhelm (15) zur Verwendung mit einem Fahrrad (20) und zum Schutz eines Helmträgers vor Kopfverletzungen,
- mit einem schalenartig ausgebildeten Helmkörper (16) zum Absorbieren von äußeren mechanischen Stößen und Schlägen;
- mit einem am Helmkörper angebrachten Helmvisier (19);
- mit zwei nebeneinander auf dem Helmvisier angeordneten Anzeigeeinrichtungen (1) nach Anspruch 1 oder 7, wobei die beiden Anzeigeeinrichtungen (1) so am Helmvisier (19) angeordnet sind, dass sie für den Helmträger beim Tragen des Fahrradhelms (15) sichtbar sind,
- mit einer Kommunikationseinheit (18) zum drahtlosen Verbinden der Anzeigeeinrichtungen (1) mit einer Steuerungs-/Regelungseinrichtung (25) des Fahrrads (20).

10. Fahrradhelm nach Anspruch 9,
**dadurch gekennzeichnet, dass**
- der Fahrradhelm eine Mittellängsachse (M) aufweist, welche den Fahrradhelm in eine linke und eine rechte Helmhälfte (15l, 15r) unterteilt,
- eine der beiden Anzeigeeinrichtung (1) in der linken Helmhälfte (15l) am Helmvisier (19) angeordnet ist und die andere Anzeigeeinrichtung (1) in der rechten Helmhälfte (15r) am Helmvisier (19 angeordnet ist.

11. Fahrrad (20), bevorzugt Pedelec (21),
- mit einem Hinterrad (22a) und mit einem vom Benutzer des Fahrrads (20) lenkbaren Vorderrad (22b);
- mit einem Sitz (23), auf welchem der Benutzer des Fahrrads (20) sitzen kann;
- mit einem Lenker (24) zum Steuern des Vorderrads (22b);
- mit wenigstens einem in einem hinteren Bereich (26) des Fahrrads (20) angeordneten Radarsensor (27), mittels welchem ein sich hinten an das Fahrrad (20) anschließender hinterer Umgebungsbereich (28) des Fahrrads (20) zumindest bereichsweise auf das Vorhandensein wenigstens eines weiteren Verkehrsteilnehmers hin überwacht werden kann;
- mit einer Steuerungs-/Regelungseinrichtung (25), welche zum Empfang von vom wenigstens einen Radarsensor (27) erzeugten Sensordaten mit diesem datenübertragend verbunden ist,
- mit wenigstens einer, vorzugsweise zwei, am Lenker angeordneten Anzeigeeinrichtung(en) (1) nach einem der Ansprüche 1 bis 8 oder/und mit einem Fahrradhelm nach Anspruch 9 oder 10, wobei die wenigstens eine Anzeigeeinrichtung (1) drahtlos oder drahtgebunden mit der Steuerungs-/Regelungseinrichtung (25) verbunden ist, so dass die Steuerungs-/Regelungseinrichtung (25) deren Leuchtelemente (10) in Abhängigkeit von den empfangenen Sensordaten ansteuern kann.

12. Fahrrad nach Anspruch 11,
**dadurch gekennzeichnet, dass**
die wenigstens eine Anzeigeeinrichtung (1) so am Lenker angeordnet ist, dass der dem auf dem Sitz (23) sitzende Fahrer die Leuchtelemente (10) sehen kann;

13. Fahrrad nach Anspruch 11 oder 12,
**dadurch gekennzeichnet, dass**
die Steuerungs-/Regelungseinrichtung (25) wenigstens eines der Leuchtelemente (10) so ansteuert, so dass dieses betreffend die Emission von Licht seinen bisherigen Zustand ändert, wenn mittels des Radarsensors (27) das Vorhandensein wenigstens eines Verkehrsteilnehmers detektiert wurde und vom wenigstens einen Radarsensor (27) mit dieser Detektion korrespondierende Sensordaten an die Steuerungs-/Regelungseinrichtung (25) übermittelt wurden,

14. Fahrrad nach einem der Ansprüche 11 bis 13,
**dadurch gekennzeichnet, dass**
der wenigstens eine Radarsensor (27) so ausgebildet und am Fahrrad (20) angeordnet ist, dass von diesem zumindest unterschieden werden kann, ob sich ein erkannter Verkehrsteilnehmer in einem seitlich linken Bereich (31a) hinter dem Fahrrad (20) oder in einem seitlich rechten Bereich (31b) hinter dem Fahrrad oder (20) in einem mittleren Bereich (31c) zwischen dem seitlich linken und rechten Bereich (31a, 31b) befindet.

15. Fahrrad nach einem der Anspruch 11 bis 14,
**dadurch gekennzeichnet, dass**
der Lenker (24) eine linke und einen rechte Lenkerhälfte (32a, 32b) aufweist und an der linken oder/und rechten Lenkerhälfte (32a, 32b) (jeweils) eine Anzeigeeinrichtung (1) angeordnet ist, deren Leuchtelemente (10) von der Steuerungs-/Regelungseinrichtung (25) steuerbar sind.

16. Fahrrad nach einem der Ansprüche 11 bis 15,
**dadurch gekennzeichnet, dass**
der Lenker (24) einen linken und einen rechten Griff (29a, 29b) aufweist und im linken bzw. rechten Bereich (30a, 30b) wenigstens eines der beiden Griffe (29a, 29b), vorzugsweise im Bereich (30b, 30b) beider Griffe (29a, 29b), (jeweils) eine Anzeigeeinrichtung (1) angeordnet ist, deren Leuchtelemente (10) von der Steuerungs-/Regelungseinrichtung (25) steuerbar sind.

17. Verfahren zum Betreiben eines Fahrrads (20) nach einem der Ansprüche 11 bis 16,
gemäß welchem die Steuerungs-/Regelungseinrichtung (25) wenigstens eines der Leuchtelemente (10), vorzugsweise mehrere oder alle der Leuchtelemente (10), der wenigstens einen Anzeigeeinrichtung (1) so ansteuert, so dass betreffend die Emission von Licht seinen bisherigen Zustand ändert, wenn mittels des Radarsensors (27) eine Zustandsänderung betreffend einen Verkehrsteilnehmer hinter dem Fahrrad (20) erkannt mit dieser Zustandsänderung korrespondierende Sensordaten vom Radarsensors (27) an die Steuerungs-/Regelungseinrichtung (2) übermittelt werden.

18. Verfahren nach Anspruch 16 oder 17,
**dadurch gekennzeichnet, dass**
die vom Radarsensor (27) erkannte Zustandsänderung umfasst oder ist:
- ein erstmaliges Erkennen eines bestimmten Verkehrsteilnehmers;
- eine Positionsänderung, insbesondere eine Abstandsänderung, des erkannten Verkehrsteilnehmers relativ zum Fahrrad (20);
- ein Nicht-Mehr-Erkennen eines zuvor bereits erkannten Verkehrsteilnehmers,

19. Verfahren nach einem der Ansprüche 16 bis 18,
**dadurch gekennzeichnet, dass**
wenigstens ein Leuchtelement (10) eingeschaltet oder ausgeschaltet oder umgeschaltet wird, wenn mittels des Radarsensors (27) ein Verkehrsteilnehmer erkannt wird.

20. Verfahren nach einem der Ansprüche 16 bis 19,
**dadurch gekennzeichnet, dass**
wenigstens ein Leuchtelement (10) eingeschaltet oder ausgeschaltet oder umgeschaltet wird, wenn mittels des Radarsensors (27) erkannt wird, dass sich der Abstand eines erkannten Verkehrsteilnehmers zum Fahrrad (20) ändert, insbesondere reduziert.

21. Verfahren nach einem der Ansprüche 16 bis 20,
**dadurch gekennzeichnet, dass**
wenigstens ein Leuchtelement (10) eingeschaltet oder ausgeschaltet oder umgeschaltet wird, wenn ein mittels des Radarsensors (27) bereits erkannter Verkehrsteilnehmer nicht mehr detektiert werden kann.

22. Verfahren nach einem der Ansprüche 16 bis 21,
**dadurch gekennzeichnet, dass**
- die Steuerungs-/Regelungseinrichtung (25) zum Einschalten/Ausschalten/Umschalten wenigstens eines Leuchtelements (10) die am linken Griff (29a) angeordnete Anzeigeeinrichtung (1) ansteuert, wenn mittels des Radarsensor erkannt wurde, dass sich der erkannte Verkehrsteilnehmer im seitlich linken Bereich (31a) hinter dem Fahrrad (20) befindet;
- die Steuerungs-/Regelungseinrichtung (25) zum Einschalten/Ausschalten/Umschalten wenigstens eines Leuchtelements (10) die am rechten Griff (29b) angeordnete Anzeigeeinrichtung (1) ansteuert, wenn mittels des Radarsensors (27) erkannt wurde, dass sich der erkannte Verkehrsteilnehmer im seitlich rechten Bereich (31b) hinter dem Fahrrad befindet;
- die Steuerungs-/Regelungseinrichtung (25) zum Einschalten/Ausschalten/Umschalten wenigstens eines Leuchtelements (10) sowohl die am linken Griff (29a) angeordnete Anzeigeeinrichtung (1) als auch die am rechten Griff (29b) angeordnete Anzeigeeinrichtung (1) ansteuert, also wenigstens zwei Leuchtelemente (10) einschaltet oder ausschaltet oder umschaltet, wenn mittels des Radarsensors (27) erkannt wurde, dass der Verkehrsteilnehmer sich im mittleren Bereich (31c) zwischen dem linken und rechten Bereich (31a, 31b) hinter dem Fahrrad (20) befindet.

23. Verfahren nach einem der Ansprüche 16 bis 22,
**dadurch gekennzeichnet, dass**
die Steuerungs-/Regelungseinrichtung (25) in Abhängigkeit von der erkannten Zustandsänderung durch Ansteuerung wenigstens eines, vorzugsweise mehrerer oder aller der Leuchtelemente (10) der Anzeigeeinrichtung (1) eines oder mehreres aus Folgendem variiert wird:
- Farbe des emittierten Lichts,
- Helligkeit des emittierten Lichts,
- Blinkfrequenz des emittierten Lichts,
- Anzahl der Licht emittierenden Leuchtelemente (10).

24. Verfahren nach einem der Ansprüche 16 bis 23,
**dadurch gekennzeichnet, dass**
die Steuerungs-/Regelungseinrichtung (25) in Abhängigkeit von der erkannten Zustandsänderung durch Ansteuerung der Anzeigeeinrichtung (1) eine vorbestimmte Lichtsequenz erzeugt, bei welcher Farbe oder/und Helligkeit oder/und Blinkfrequenz des von der Anzeigeeinrichtung (1) emittierten Lichts bei einem, mehreren oder allen Leuchtelement(en) (10) der Anzeigeeinrichtung (1) nacheinander in einer bestimmten, vorzugsweise vordefinierten, Weise geändert wird/werden.

25. Fahrrad (20) nach einem der Ansprüche 11 bis 16,
**dadurch gekennzeichnet, dass**
die Steuerungs-/Regelungseinrichtung (25) zur Durchführung des Verfahrens nach einem der Ansprüche 16 bis 24 eingerichtet/programmiert ist.
